Europäisches Patentamt

European Patent Office

Office européen des brevets

(11) Publication number: **0 349 678**
**A1**

## (12) EUROPEAN PATENT APPLICATION

(21) Application number: 88201441.8

(51) Int. Cl.4: **F16L 55/16 , E03F 3/06**

(22) Date of filing: 07.07.88

(43) Date of publication of application:
10.01.90 Bulletin 90/02

(84) Designated Contracting States:
AT BE CH DE ES FR GB GR IT LI LU NL SE

(71) Applicant: KONINKLIJKE WEGENBOUW
STEVIN B.V.
Beneluxlaan 9
NL-3527 HS Utrecht(NL)

(72) Inventor: Spee, Paulus Richardus
Manonsingel 6
NL-3438 VH Nieuwegein(NL)
Inventor: Vos, Jannes
Amstel 10
NL-3961 HJ Wijk bij Duurstede(NL)

(74) Representative: Baarslag, Aldert D. et al
Nederlandsch Octrooibureau
Scheveningseweg 82 P.O. Box 29720
NL-2502 LS 's-Gravenhage(NL)

(54) **Process and device for lining a pipe, in particular a sewer pipe.**

(57) Device and process for lining a damaged pipe, such as a sewer pipe by drawing an inflatable inner tube (4,9) of airtight and watertight material into the sewer pipe, which inner tube is surrounded by one or more lengthwise extending chambers into which a hardening material is pumped following the inflation of the inner tube.

fig-1

EP 0 349 678 A1

## Process and device for lining a pipe, in particular a sewer pipe

The invention relates to a device for lining a pipe, in particular a sewer pipe, comprising an internally inflatable flexible inner tube to which hardenable material is supplied.

Such a device is known in the form of a tubing which is impregnated beforehand with a special synthetic resin, and which after being prepared in this way is drawn into the pipe and inflated, following which the synthetic resin is hardened by heating with hot air or hot water, or by using ultraviolet light.

Repairing, for example, sagged and thus leaking sewer pipes in this way differs favourably from the conventional methods of repairing sewer pipes, such conventional methods involving breaking up the ground such as the road under which the pipe is lying. Another known process consists of placing in the sewer pipe lengths or segments of piping of a suitable material such as plastic which are welded or cemented together, following which the space between the inserted pipe and the pipe to be repaired is filled with a hardening material such as a cement mortar.

All these known methods have great disadvantages because they cause great nuisance, are very labour intensive, and the working speed is low, thus making the costs high.

The object of the invention is to improve this. This object is achieved according to the invention in that the inner tube consists of an airtight and watertight inner layer surrounded by at least one lengthwise-running chamber which has a connection for introducing hardenable material into said chamber. The inner tube is thus according to the invention not impregnated beforehand with a hardenable material, but consists of a tight inner wall made, for example, of a plastic sheet or other suitable material, around which there are lengthwise-running chambers of pliable or flexible material, such as a plastic or a fabric material, it being possible to pump individually said chambers full of a hardenable or hardening material such as a cement mortar. This inner tube offers little resistance while it is being drawn into the pipe, for the inner tube is supple and clean through the absence of hardenable material at that time. After inflation of the inner tube, a pipe shape is obtained and lies in the pipe for lining, and which can have a predetermined suitable cross section. When the hardenable material is now fed to the chamber(s), it will expand and the tube will be taken into the correct position, while the space left between the inner tube and the inside of the pipe to be lined is filled up.

The inflated tube can be surrounded by a single chamber. The filling with hardenable material must then be carried out from the bottom and proceed gradually upwards along the side walls until the filling is complete.

It is preferable to have a device with a large number of lengthwise-running chambers which are uniformly distributed over the periphery and which can be filled separately, i.e. one by one, or in groups. For example, it may be desirable to fill a number of chambers distributed uniformly over the periphery of the inner tube with hardenable material first, thereby already obtaining good positioning and giving the inner tube a certain rigidity lengthwise, following which the chambers in the spaces situated between them are filled up, preferably beginning at the bottom, then the sides, and afterwards the top part.

It is also preferable for the material of the walls of the chambers to be slightly permeable, for example a fabric with slight permeability, so that the hardenable material, in particular the cement mortar fed into the chambers, can also come out to some extent and fill up any hollow spaces still existing between the outside of the inflated chambers and the inside wall of the pipe to be lined. The inner tube is preferably made of a chemical-resistant, wear-resistant material.

The invention will now be explained in greater detail with reference to the drawings.

Fig. 1 shows schematically in cross section a sewer pipe to be treated, where the device according to the invention is being used.

Fig. 2 shows on a large scale a section at right angles to the longitudinal axis of the device according to the invention, over part of the periphery thereof.

Fig. 3 serves to illustrate the method of filling.

Fig. 4 is a section through a sewer pipe repaired with the device according to the invention.

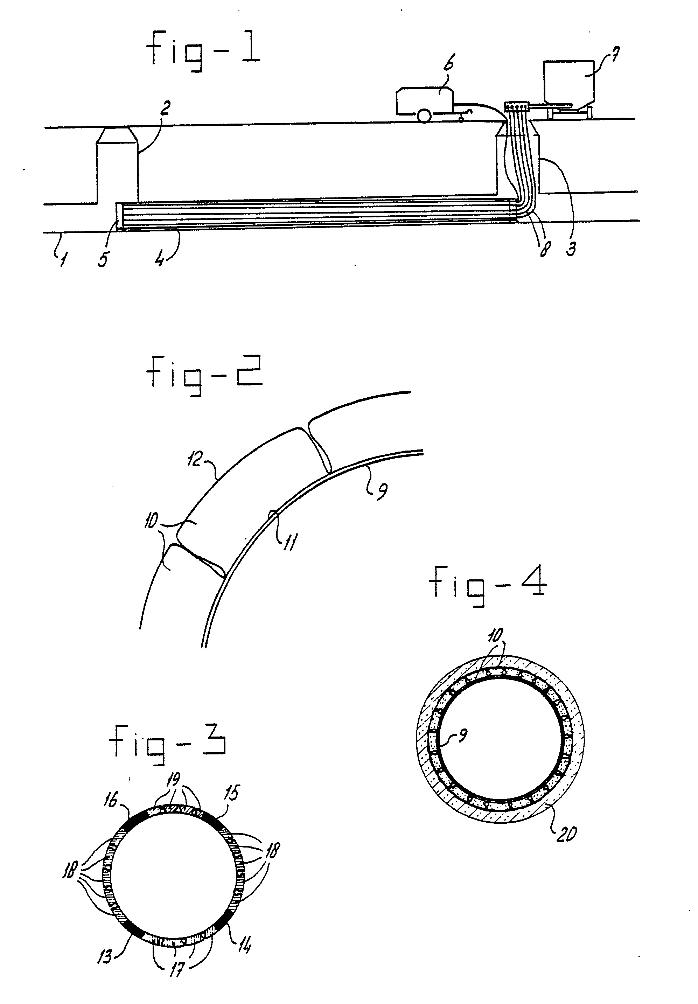

Fig. 1 shows a sewer pipe 1 with gulleys 2, 3, respectively.

The pipe 1 has had drawn into it a flexible inner tube 4, which is closed at the end 5 and at the other end is connected to a compressor 6 for inflating the inner tube with air, and to a mixing and feed unit 7 for feeding in cement mortar through hoses 8 to the chambers.

Fig. 2 shows that the inner tube consists of an airtight and water-tight sheet of chemical-resistant and wear-resistant material which is surrounded in the peripheral direction by several chambers 10 with an inner wall 11 and an outer wall 12 made of a suitable material, such as a fabric material, fastened together, for example by sewing, gluing or welding.

These chambers extend over the entire length of the inner tube 9, thus over the entire length shown in Fig. 1.

After the inner tube, consisting of the inner layer 9 and the chambers 10, is drawn into the sewer pipe 1, it is inflated and obtains then the cylindrical shape shown in Fig. 3, but still has slack chambers 10. The chambers are then filled, preferably beginning at chambers 13, 14, 15 and 16, thus giving the inner tube four rigid ribs and centring it in the pipe. The chambers 17 in the bottom part are subsequently filled, then the chambers 18 in the side walls, and finally the chambers 19 in the top part. Since the chambers are made of a permeable fabric material, the hardenable material passing out through it will smooth out uneven places on the inner wall of the pipe being lined and will fill up any spaces between the chambers.

A sewer pipe can be repaired very quickly in this way. One then obtains the pipe shown in cross section in Fig. 4, consisting of the original pipe 20, made for example of concrete, having inside it the inner tube shown in Fig. 3, which thus has an inner wall formed by a tight sheet 9, while the space between said inner wall and the original pipe is filled up by means of the chambers 10 which are filled with hardenable material, and which during filling come to rest against the inside of the original pipe.

## Claims

1. Device for lining a pipe, in particular a sewer pipe, comprising an internally inflatable flexible inner tube (4,9) which is provided with hardenable material, characterized in that the inner tube (4,9) consists of an airtight and watertight inner layer surrounded by at least one lengthwise-running chamber (10) which has a connection (8) for introducing hardenable material into said chamber.

2. Device according to Claim 1, characterized in that the inner tube (4,9) is surrounded by several chambers (10) uniformly distributed over the periphery of the inner tube (9), each with its own connection (8) for the infeed of hardenable material.

3. Device according to Claim 1 or 2, characterized in that the inner tube (4,9) is made of a chemical-resistant and wear-resistant plastic.

4. Device according to Claim 1, 2 or 3, characterized in that the chamber(s) (10) is (are) made of a permeable material, in particular a fabric material (12).

5. Process for using the device according to Claims 1, 2, 3 or 4, for lining a pipe, such as a sewer pipe, in which the inner tube (4,9) is drawn into the pipe or the like to be treated, and is subsequently inflated and fixed in the inflated state, characterized in that after inflation of the inner tube (4,9) hardenable material is fed to the chamber(s) (10), beginning near the underside (15,14,17) of the tubing, and proceeding with the filling along the two sides (18) up to the top part(15,16,19).

6. Process for use of the device according to one or more of the preceding Claims 1 to 4, for lining a pipe, such as a sewer pipe, in which the inner tube (4,9) is drawn into the pipe or the like to be treated, and is subsequently inflated and fixed in the inflated state, characterized in that first of all a number of chambers (13,14,15,16) uniformly distributed over the periphery are filled with hardenable material, and the chambers (17,18,19) in between them are then filled with hardenable material, starting at the bottom (17), proceeding on both sides (18), and finally doing the top part (19).

fig-1

fig-2

fig-4

fig-3

European Patent Office

EUROPEAN SEARCH REPORT

Application Number

EP 88 20 1441

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 603 597 (H. ZICKERMANN) * Column 2, line 67 - column 3, line 2; column 3, lines 25-34; figures C,D * | 1-4 | F 16 L 55/16 E 03 F 3/06 |
| A | | 5,6 | |
| A | WO-A-8 505 431 (A. KNOWLES) --- | | |
| A | EP-A-0 228 998 (ROLINING AG) --- | | |
| A | US-A-4 009 063 (E. WOOD) ----- | | |

TECHNICAL FIELDS SEARCHED (Int. Cl.4)

F 16 L
E 03 F

The present search report has been drawn up for all claims

| Place of search | Date of completion of the search | Examiner |
|---|---|---|
| THE HAGUE | 10-03-1989 | BARTSCH A.W. |

EPO FORM 1503 03.82 (P0401)